Europäisches Patentamt

European Patent Office

Office européen des brevets

(11) Publication number: **0 278 607**
**A1**

## EUROPEAN PATENT APPLICATION

(21) Application number: **88300506.8**

(22) Date of filing: **21.01.88**

(51) Int. Cl.4: **A01D 46/00** , A01G 3/00

(30) Priority: **21.01.87 NZ 219018**

(43) Date of publication of application:
**17.08.88 Bulletin 88/33**

(84) Designated Contracting States:
**AT CH DE ES FR GB IT LI LU**

(71) Applicant: **Gallagher Engineering Limited**
**Kahikatea Drive**
**Hamilton(NZ)**

(72) Inventor: **Kateley, Peter Arthur**
**92 Mahoe Street**
**Hamilton(NZ)**

(74) Representative: **Lee, Philip Graham et al**
**MARKS & CLERK 57/60 Lincoln's Inn Fields**
**London WC2A 3LS(GB)**

(54) **Cutter.**

(57) A cutter particularly intended for excising plant
foliage without damaging fruit comprises suction ap-
paratus (2), cutting apparatus (3) and a barrier or
barriers (4, 5) the suction apparatus (1, 2) being
capable of sucking foliage from plants so that the
cutting apparatus can then excise the foliage whilst
the barrier or barriers ensure that only minimal dam-
age to the fruit and wood thereof occurs.

FIGURE 1

Xerox Copy Centre

## "CUTTER"

This invention relates to a cutter, in particular a cutter for excising plant foliage.

Cutters for excising plant foliage are known, particularly by horticulturalists who sometimes require the lower leaves to be removed from over-vigorous vines to reduce shading effects. The removing of the leaves also reduces the incidence of botrytis, improves the ripening of fruit and allows sprays to reach their target.

Known cutters have a fan, which either blows the leaves so that the leaves are severed at the petiole by the high pressure jets of air or alternatively the leaves are sucked and then cut by the fan itself.

Cutters which blow the leaves before cutting require considerable power to drive the same Furthermore, some guesswork is involved as to the positioning of the cutter. The method of sucking foliage overcomes the aforementioned difficulties but is indiscriminatory with respect to vine wood, fruit and so forth causing a not insignificant degree of damage to it. Furthermore, damage to the fan blades can occur when matter of a more solid nature than leaves hits the fan.

It is an object of the present invention to provide a cutter which addresses the aforementioned problems and which may have a broader general application.

Further objects and advantages of the present invention will become apparent from the ensuing description which is given by way of example.

According to the present invention, there is provided a cutter comprising suction apparatus, cutting apparatus and a barrier or barriers, the suction apparatus being capable of sucking foliage so that the cutting apparatus can then excise the foliage of plants, the barrier or barriers ensuring that only minimal damage to the fruit and wood thereof occurs.

According to a further aspect of the present invention, the suction apparatus may be a fan and the cutting apparatus may be a cutting blade.

According to a yet further aspect of the present invention, the barriers may comprise a grid situated in front of the fan and cutting blade, and guide plates situated to the side of it.

Aspects of the present invention will now be described by way of example only with reference to the accompanying drawings in which:

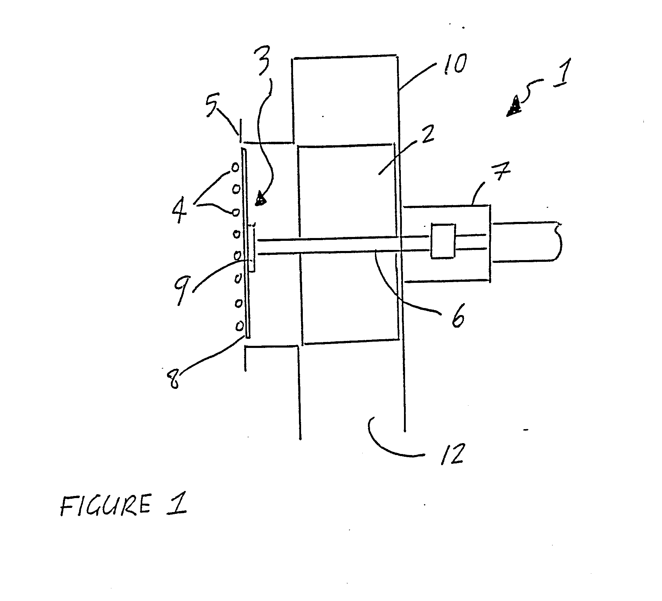

Figure 1 is a diagrammatic cross-section of a cutter in accordance with one possible embodiment;

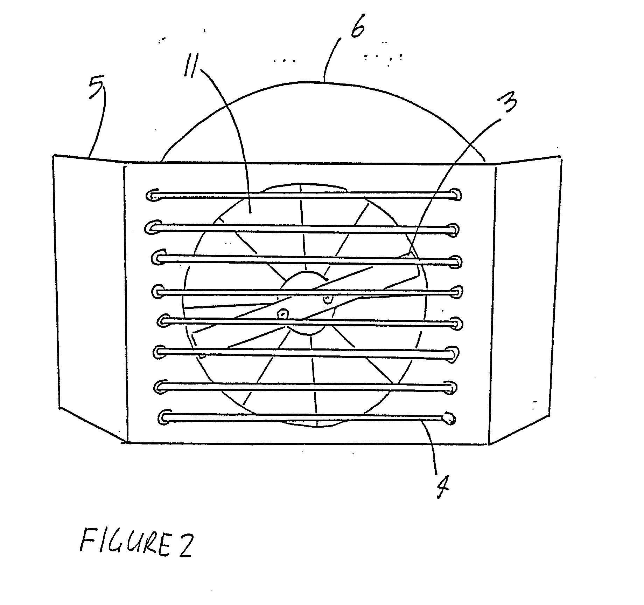

Figure 2 is a diagrammatic front view of a cutter in accordance with the above embodiment;

Figure 3 is a diagrammatic perspective view showing the cutter in position on a tractor;

Figure 4 is a diagrammatic perspective view of a possible mounting means for the cutter;

Figure 5 illustrates one possible adjustment for the cutter; and

Figure 6 is a diagrammatic plan view of one possible method of using the cutter.

In the drawings there is shown a cutter generally indicated by arrow 1 comprising suction apparatus 2, cutting apparatus 3 and barriers 4 and 5, the suction apparatus 2 being capable of sucking foliage from plants so that the cutting apparatus 3 can then excise the foliage of plants, the barriers 4 and 5 ensuring that only minimal damage to the fruit and wood thereof occurs.

In the embodiment shown, the suction apparatus is a paddle fan 2 which is coupled by a drive shaft 6 to an hydraulic motor 7. The cutting apparatus 3 is a rotary cutting blade 8 which is coupled to the same drive shaft 7 as the fan 2 by a mounting plate 9.

The paddle fan 2 has eight blades of depth 150mm and length 180mm. The blade depth extends parallel to the drive shaft 6.

The rotary cutting blade 8 is essentially a flat cutting bar, 400mm long and 50mm wide. The blade is 6mm thick and has a cutting surface angled at 30° at both ends of the blade. The cutting surface is 80mm long. The action of the blade is parallel to the plane of the circular aperture 11.

Both the fan and the cutting blades are enclosed within an open ended housing 10 with a large circular aperture 11 and an opening 12. The diameter of the aperture 11 is preferably in the range of 300 mm to 600mm as this corresponds approximately to the width of the fruiting zone from which it is desired to have foliage removed. In operation, the paddle fan 2 sucks in foliage through the aperture 11 where it is cut by the blade 8. The action of the fan 2 then causes the cut foliage to be blown out of the housing 10 through the opening 12.

In the embodiment shown, there is incorporated into the cutter 1, two barriers, namely a grid 4 and guide plates 5. The grid 4 is thought to be an important feature as this prevents matter of a more solid nature than foliage from being sucked into the blade 8 and fan 2, thus lessening the chances of damage to both the plants and the cutter itself.

A function of the guide plates 5 is to partially align the plant material with the cutting apparatus in advance of it as the cutter moves along the foliage to be cut, thus making the passage easier and further reducing the chances of vine wood being damaged by passing straight into the cutting blades.

The grid 4 and guide plates 5 can be incorporated into one another and attached to the housing 10 with the grid 4 being positioned over the aperture 11.

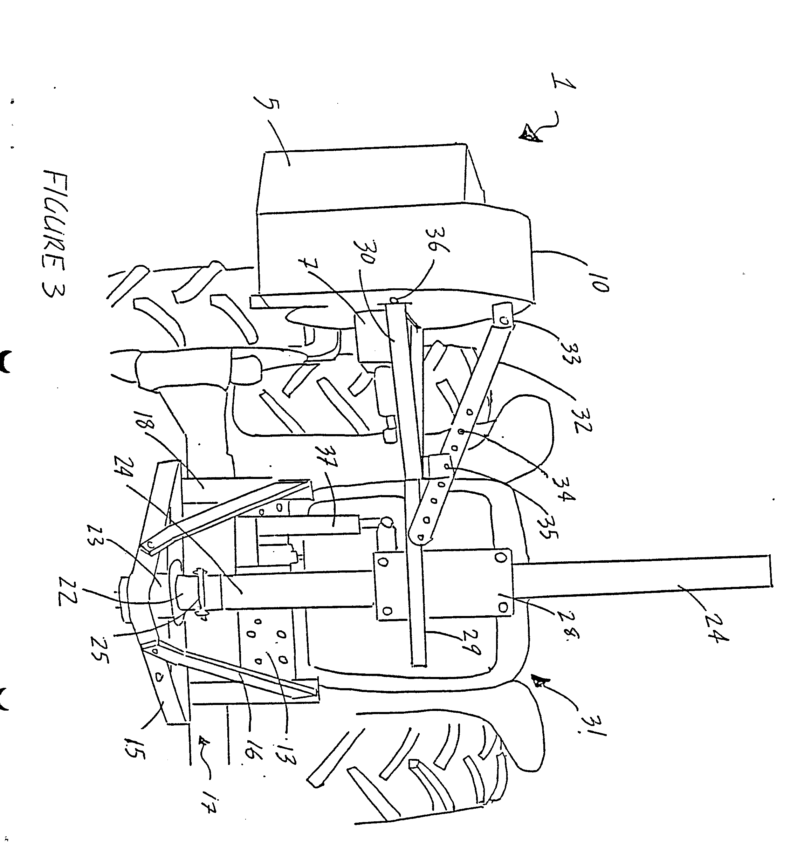

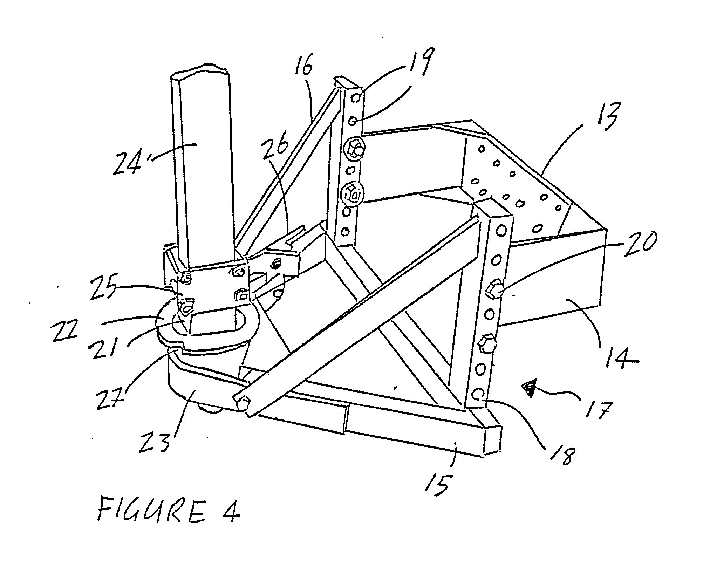

It is preferable that the cutter 1 is adapted to be operated from a motive device such as a tractor 31. By mounting the cutter at the front of a conventional tractor as shown in figures 3 and 4, it is found that this position offers the operator advantages in visibility and manoeuvrability. It is further convenient for the cutter to be hydraulically driven using the normal hydraulic take-offs built into the tractor. To accommodate this feature it is envisaged that each cutter will be sold with long hoses ready to couple to the standard hydraulic couplers on most tractors.

Trials have indicated that oil requirements in relation to operating the cutter are minimal. The preferred rate of fan operation is 1500 rpm which requires an oil flow of a steady 20 litres per minute. It is envisaged that each cutter will also be sold with an oil flow regulator which will regulate the oil flow down to the required amount, and maintain the 1500 rpm. By operation of the fan in the range of 1400 to 1700 rpm it has been found that the suction is weak enough to ensure that young fruit is not sucked in by the force of the fan and subsequently cut, yet strong enough for the leaves to be sucked towards the cutting blade from out of the canopy.

The cutter can be mounted onto a tractor 31 with the aid of a multi-holed adaptor plate 13, which forms part of a bracket 14. Attached to this bracket is a substantially triangular frame 15, supported by struts 16 with respect to adjustment means 17. The adjustment means 17 comprises a bar 18 with apertures 19. Vertical adjustments are made by aligning the apertures 19 with the apertures (not shown) on the bracket 14 and securing the bar 18 by bolts 20 passing through the apertures.

Attached to the frame 15 is a shaft 21, plate 22 and bearings 23. A mast 24 is clamped by means of a clamp 25 to the shaft 21, the mast therefore being able to turn with the bearings 23.

A quick acting clamp 26 and a slot 27 on the plate 22 serve as locking means to hold the mast 24 in position.

Further up the mast 24 is a vertical adjustment means 28 which is a slideable clamp. The vertical adjustment means 28 can be lifted (and subsequently the cutter 1) by means of an hydraulic ram 37 which is operated from the tractor's hydraulic system. Attached to the clamp 28 are supports 29 which are further attached to a frame 30 on which the cutter 1 is mounted by means of a pivot 36.

The width by which the cutter extends from the tractor can be altered by means of the support 29. This has apertures (not shown) along its length through which the support 29 is bolted to a right angle bracket (not shown) on the mast. Placing the bolts though different apertures thus alters the width by which the cutter extends from the tractor. It is envisaged that the operator need only make this adjustment once.

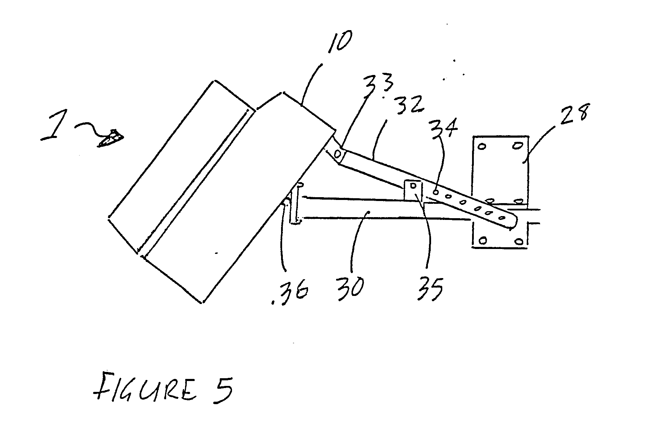

To facilitate angling of the cutter 1 with respect to the tractor 31, a bar 32, with apertures 34, pivotably mounted to a bracket 33 on the cutter is used. The bar 32 can be secured at different positions by passing bolts through different apertures 34 and an aperture in the bracket 35 on the frame 30. This feature is clearly shown in figure 5.

In use, the operator mounts the cutter upon the front of his tractor. The provision of the multi-holed adaptor plate 13, the adjustment means 17 and adjustment means 28 enables the cutter to be adaptably mounted to most forms of tractors. It is envisaged that once the required adjustments have been made, these will not need to be altered from one season to the next.

Depending on the angle of the plant canopy, the angle of the cutter can be altered as illustrated in Figure 5.

Next the hydraulic motor 7 is coupled to the hydraulic system of the tractor, this hydraulic motor operating the fan 2 and cutting blade 8.

To use, the operator merely drives the tractor alongside the canopy which is to be cut. The guide plates 5 push back and flatten vine wood, fruit and so forth before it reaches the grid 4. As the grid 4 passes over the foliage, the paddle fan 2 sucks the foliage in through the aperture 11, the foliage being cut by the cutting blade 8. The foliage is then blown out of the back of the housing 10 through the opening 12 by the fan.

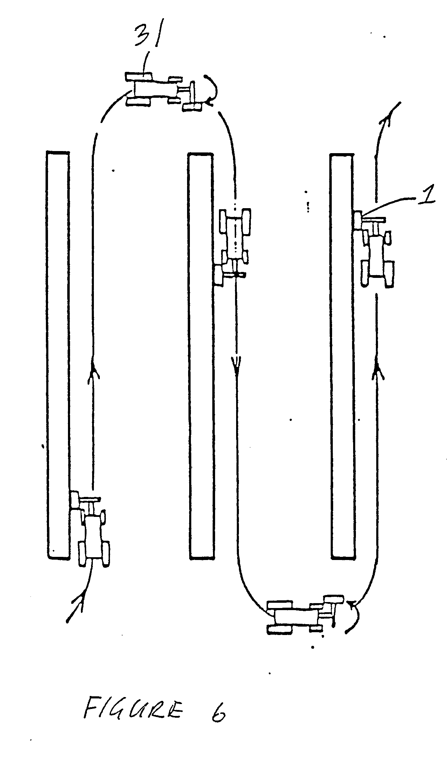

In some cases, growers may wish to remove foliage from one side of the canopy only. So as to avoid unnecessary back-tracking, a method of removing it is illustrated in Figure 6. After one row has been cut the clamp 26 is disengaged from the slot 27, enabling the cutter 1 to swing on the bearings 23 from one side of the tractor 31 to the other. The clamp is then locked into position enabling the operator to cut the canopies as shown.

It should be appreciated that the adjustments of the cutter position can be achieved by a number of methods including manual, hydraulic and electrical.

It is envisaged that means to deflect the exhaust air and foliage out of the cutter away from the ground can be employed in the drier regions. This prevents dust clouds forming and insects and the like being transferred by the same.

Aspects of the present invention have been described by way of example only and it should be appreciated that additions and modifications thereto may be made within the scope of the appended claims.

**Claims**

1. A cutter comprising suction apparatus (2), cutting apparatus (3) and a barrier or barriers (4, 5), said suction apparatus (2) being capable of sucking foliage from plants so that the cutting apparatus (3) can then excise the foliage of plants, the barrier or barriers (4, 5) ensuring that only minimal damage to the fruit and wood thereof occurs.

2. A cutter as claimed in claim 1 wherein the suction apparatus (2) is a fan.

3. A cutter as claimed in either claim 1 or claim 2 wherein the cutting apparatus is a cutting blade (8).

4. A cutter as claimed in any of claims 1 to 3 wherein the barrier comprises a grid (4) which is situated between the cutting apparatus and the foliage to be cut.

5. A cutter as claimed in any of claims 1 to 4 wherein the barrier comprises guide plates (5), the arrangement and construction being such that said guide plates (5) cause branches to be guided past the suction apparatus so that the leaves can be removed.

6. A cutter as claimed in any of claims 1 to 5 which is particularly adapted to be operated from a tractor.

7. A cutter as claimed in any of claims 1 to 6 wherein the suction apparatus (2) and the cutting apparatus (3) are hydraulically driven.

8. A cutter as claimed in any of claims 1 to 7 which is pivotable with respect to a tractor.

9. A cutter as claimed in any of claims 1 to 8 which can easily be moved from one side of the tractor to another.

10. A cutter as claimed in any of claims 1 to 9 wherein the suction apparatus is a fan (2) operating at between 1400 and 1700 revolutions per minute.

11. A cutter as claimed in any of claims 1 to 10 wherein there is an aperture (11) in front of the suction apparatus through which the foliage passes before being excised, said aperture having a diameter of between 300 and 600 millimetres.

FIGURE 1

FIGURE 2

FIGURE 3

0 278 607

FIGURE 4

FIGURE 5

FIGURE 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-U-8 619 756 (WEINSDÖRFER) <br> * Claims 1,8,9; page 5, last paragraph - page 7, last paragraph; figures 1,2 * <br> --- | 1-4,6-9 | A 01 D 46/00 <br> A 01 G 3/00 |
| X | FR-A-2 483 168 (BOBARD JEUNE) <br> * Page 1, line 25 - page 3, line 10; figures * | 1-4 | |
| Y | | 5-8 | |
| | --- | | |
| Y | FR-A-2 390 084 (DABRAIGEON) <br> * Page 3, line 15 - page 5, line 13; figures 1-4 * <br> ----- | 5-8 | |

TECHNICAL FIELDS SEARCHED (Int. Cl.4)

A 01 D
A 01 G

The present search report has been drawn up for all claims

| Place of search | Date of completion of the search | Examiner |
|---|---|---|
| THE HAGUE | 28-04-1988 | HERYGERS J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)